# FASCICULE DE BREVET EUROPEEN

(11) **EP 2 622 305 B1**
(45) Date de publication et mention de la délivrance du brevet: **14.11.2018**
(21) Numéro de dépôt: 11779757.1
(22) Date de dépôt: 28.09.2011
(51) Int. Cl.: G01B 5/08, G01B 5/12, G01B 5/06, G01B 7/12, G01B 21/10

(54) **DISPOSITIF D'INSPECTION POUR LES BAGUES ET COLS DE RECIPIENTS**
VORRICHTUNG ZUR PRÜFUNG DER RINGE UND HÄLSE VON BEHÄLTERN
DEVICE FOR INSPECTING THE RINGS AND NECKS OF CONTAINERS

(30) Priorité: 28.09.2010 FR 1057791
(43) Date de publication de la demande: 07.08.2013
(73) Titulaire: Tiama, 69390 Vourles (FR)
(72) Inventeur: GARIN, Jean-François, F-69560 Saint-romain En Gal (FR); PITAVAL, Dominique, F-42320 Saint-christo En Jarez (FR)
(74) Mandataire: Thibault, Jean-Marc
(86) Numéro de dépôt international: PCT/FR2011/052269
(87) Numéro de publication internationale: WO 2012/042175

(56) Documents cités:
- GB-A- 1 432 120
- US-A- 3 390 569
- US-A- 4 798 096

## Description

La présente invention concerne le domaine technique de l'inspection d'objets creux ou récipients au sens général, tels que par exemple des bouteilles, des pots, des flacons notamment en verre en vue de déceler d'éventuels défauts dimensionnels ou de surface présentés par un tel récipient.

Dans le domaine technique de l'inspection de récipients notamment en verre, il est prévu après leur fabrication, de réaliser différents contrôles notamment du goulot ou de la bague du récipient (diamètres interne/externe, étanchéité, hauteur) et du col du récipient (diamètre intérieur, profil intérieur, brochage).

Afin de réaliser de telles inspections, il est connu d'utiliser un ou plusieurs dispositifs comportant chacun une tête d'inspection destinée à être abaissée soit sur une distance précise en fonction de la nature du récipient, soit pour venir en contact avec le récipient, soit pour être en appui sur le récipient le temps de l'inspection. De manière classique, une telle inspection est réalisée à l'aide d'une machine présentant soit un convoyeur linéaire adapté pour maintenir les récipients dans des positions précises, soit un convoyeur à étoiles, avec un mouvement circulaire indexé pour placer les récipients en relation avec différents postes de contrôle. Chaque tête d'inspection est déplacée selon un mouvement vertical alternatif pour un convoyeur à étoiles tandis que pour un convoyeur linéaire, la tête d'inspection présente de façon supplémentaire, un déplacement horizontal.

Le brevet FR 2 818 748 décrit un dispositif d'inspection comportant une tête montée sur une glissière horizontale qui est fixée sur un chariot déplacé selon des mouvements alternatifs verticaux par une courroie montée entre une poulie folle et une poulie menée par un servomoteur. L'un des inconvénients d'un tel dispositif est la masse déplacée relativement importante, ce qui limite la vitesse et l'accélération de déplacement de la tête d'inspection. Il s'ensuit que la cadence d'inspection des récipients est limitée, ce qui représente un inconvénient majeur dans le processus de production en ligne de récipients. Un autre inconvénient d'un tel dispositif connu apparaît lorsque la tête d'inspection est destinée à venir en contact avec le récipient. En effet, la course de la tête d'inspection n'est pas définie à cause de la dispersion de hauteur des récipients et des défauts qui influent sur cette course comme ceux ne permettant pas à la tête d'inspection de descendre lors d'une opération de brochage. Aussi, compte tenu de l'indétermination de cette course et de la masse embarquée, il peut survenir un choc important entre la tête d'inspection et le récipient, ce qui est susceptible d'entraîner la détérioration du récipient et/ou de la tête d'inspection. Enfin un tel dispositif ne permet pas de déterminer la provenance des défauts détectés.

Le brevet GB 1 432 120 décrit un dispositif pour inspecter les récipients comportant plusieurs postes de contrôle dont l'un vise à contrôler la conformité dimensionnelle des bagues et des cols des récipients. Ce poste de contrôle comporte un équipage mobile entraîné par un système de motorisation selon un mouvement alternatif par rapport au bâti du dispositif, dans une direction de déplacement parallèle à l'axe de symétrie des récipients. Cet équipage mobile est équipé d'un calibre externe de contrôle de l'extérieur de la bague des récipients et d'un calibre interne de contrôle de l'intérieur de la bague et du col des récipients.

Le dispositif décrit par ce document GB 1 432 120 possède les mêmes inconvénients que le dispositif d'inspection décrit par le brevet FR 2 818 748.

Dans le même sens, le brevet US 3 390 569 décrit un appareil d'inspection des parties interne et externe des bagues de récipients. Cet appareil comporte un équipage mobile pourvu d'une broche de contrôle destinée à venir en appui sur la partie interne de la bague et d'une cloche de contrôle destinée à venir en appui sur la partie externe de la bague. Lorsque la cloche et la broche sont en appui sur un récipient, elles délimitent une chambre qui est mise en dépression pour déterminer si le récipient est conforme ou défectueux.

L'appareil décrit par ce document US 390 569 possède les mêmes inconvénients que le dispositif d'inspection décrit par le brevet FR 2 818 748.

Il est également connu par la demande de brevet FR 2 174 203 une machine d'inspection pour les bagues et cols de récipients comportant un équipage mobile entraîné par un système de motorisation selon un mouvement alternatif cyclique par rapport à un bâti de la machine. L'équipage mobile est déplacé selon une direction verticale parallèle à l'axe de symétrie des récipients. L'équipage mobile est équipé d'un calibre ou gabarit de contrôle de l'extérieur de la bague. Ce gabarit est monté à l'extrémité d'un manchon inférieur guidé en coulissement vertical alternatif par rapport au bâti.

L'équipage mobile comporte également un manchon supérieur monté coaxialement à l'intérieur du manchon inférieur et pourvu d'un calibre ou d'une jauge de contrôle du goulot. Ce manchon supérieur est entraîné en déplacement vertical alternatif pour assurer l'engagement de la jauge de contrôle à l'intérieur du goulot du récipient.

Chaque manchon est pourvu d'un collet destiné à passer à l'intérieur d'une encoche d'un levier lorsque le gabarit et la jauge occupent une position correspondant à un récipient non défectueux. Si le récipient ne respecte pas les tolérances prescrites, l'un et/ou l'autre des manchons occupe une position dans laquelle le collet actionne le levier qui déclenche un commutateur indiquant que les dimensions de la bouteille ne répondent pas aux tolérances prédéterminées.

Un tel dispositif permet de savoir si le défaut détecté provient du goulot ou de l'extérieur de la bague. Toutefois, un tel dispositif ne permet pas de déterminer la nature du défaut dimensionnel détecté par la jauge comme par exemple un goulot trop étroit ou trop grand et par le gabarit comme par exemple une bague trop grande ou trop petite.

Or, il apparaît important de discriminer la nature des défauts présentés par les récipients défectueux pour permettre d'agir au mieux sur le procédé de fabrication de ces récipients.

Le brevet US 4 798 096 décrit un appareil d'inspection permettant de détecter la présence de filaments de verre à l'intérieur d'un récipient en verre. Cet appareil comporte une broche mobile équipée à son extrémité libre d'une plaque montée mobile par rapport à la broche et par rapport à des capteurs de proximité. Le mouvement de la plaque est détecté lorsqu'elle rencontre des filaments de verre lors du mouvement de descente de la broche à l'intérieur du récipient.

Ce brevet indique que cet appareil d'inspection est capable de déterminer si les filaments de verre s'étendent soit à partir du fond du récipient, soit entre les parois internes du récipient. Toutefois, cet appareil n'est pas adapté pour déterminer la conformité dimensionnelle des bagues et/ou des cols des récipients.

L'objet de la présente invention vise à remédier aux inconvénients de l'état de la technique en proposant un dispositif permettant d'inspecter à haute cadence la bague et le col de récipients pour vérifier la conformité dimensionnelle des bagues et des cols des récipients et de connaître le type de défauts détectés.

Pour atteindre un tel objectif, l'objet de l'invention concerne un dispositif d'inspection pour les bagues et cols de récipients. Selon l'invention, telle que définie par la revendication 1, le dispositif d'inspection comporte :
- un équipage mobile entrainé par un système de motorisation selon un mouvement alternatif par rapport à un bâti, dans une direction de déplacement parallèle à l'axe de symétrie des récipients, l'équipage mobile étant équipé d'un calibre externe de contrôle de l'extérieur de la bague des récipients et d'un calibre interne de contrôle de l'intérieur de la bague et du col des récipients,
- un système de mesure de la position de l'équipage mobile par rapport au bâti, dans la direction de déplacement, les mesures de la position de l'équipage mobile étant fournies à une unité de traitement,
- un système de détection du contact intervenant entre le calibre interne et le récipient, lors du mouvement de l'équipage mobile, les occurrences de contact étant fournies à l'unité de traitement,
- un système de détection du contact intervenant entre le calibre externe et le récipient, lors du mouvement de l'équipage mobile, les occurrences de contact étant fournies à l'unité de traitement,
- et une unité de traitement adaptée à déterminer la conformité dimensionnelle des bagues et/ou cols des récipients et les types de défauts pour les récipients dimensionnellement non conformes en fonction des mesures de la position de l'équipage mobile et des occurrences de contact entre les calibres et le récipient.

De plus, le dispositif selon l'invention peut présenter en outre en combinaison au moins l'une et/ou l'autre des caractéristiques additionnelles suivantes :
- l'équipage mobile comporte un support mobile par rapport auquel le calibre externe et le calibre interne sont montés mobiles selon la direction de déplacement et indépendamment l'un de l'autre,
- le bâti comporte un tube extracteur présentant une première extrémité solidaire du bâti et une deuxième extrémité opposée à la première destinée à venir en appui sur le bord de la bague du récipient en cas de remontée accidentelle du récipient, les calibres interne et externe dépassant de la deuxième extrémité du tube extracteur, en s'étendant respectivement à l'intérieur et à l'extérieur dudit tube extracteur,
- l'unité de traitement réalise, en fonction des mesures de la position de l'équipage mobile et des occurrences de contact entre les calibres et le récipient, des calculs donnant des informations dimensionnelles complémentaires sur les cols et les bagues des récipients,
- l'unité de traitement calcule à partir des informations délivrées par le système de mesure et les systèmes de détection, la hauteur des récipients,
- l'unité de traitement commande l'inversion du sens de déplacement du système de motorisation, à l'aide des occurrences de contact de l'un et/ou l'autre des calibres avec le récipient,
- le dispositif comporte des mécanismes d'amortissement du contact entre le récipient et chaque calibre et de rappel en position desdits calibres,
- les systèmes de détection du contact comportent des capteurs de présence ou de proximité, de préférence de type magnétique,
- le calibre interne comporte une tige mobile par rapport au support et guidée en translation à l'intérieur d'une chemise montée à l'intérieur du tube extracteur, cette tige étant pourvue à une première extrémité d'une broche de contrôle et à sa deuxième extrémité déportée par rapport à la broche de contrôle, d'au moins une partie du système de détection du contact intervenant entre le calibre interne et le récipient,
- le calibre externe comporte une cloche de contrôle entourant le tube extracteur et montée mobile par rapport au support de l'équipage mobile,
- la cloche de contrôle est pourvue d'au moins un axe mobile guidé par rapport au support mobile et munie en tant que mécanisme d'amortissement, d'au moins un ressort interposé entre la cloche de contrôle et le support, l'axe mobile étant pourvu d'au moins une partie du système de détection du contact intervenant entre le calibre externe et le récipient,
- le support mobile de l'équipage mobile comporte une pièce traversée par le tube extracteur et assurant le guidage du ou des axes de guidage de la cloche de contrôle,
- le support de l'équipage mobile comporte une crémaillère reliée à l'une de ses extrémités à la pièce de guidage de la cloche de contrôle et à son extrémité opposée, à la chemise de guidage de la tige supportant la broche de contrôle,
- la crémaillère est entraînée en translation alternative par le système de motorisation comportant de préférence un servomoteur,
- le système de motorisation comporte un capteur de rotation faisant partie du système de mesure de la position de l'équipage mobile par rapport au bâti,
- la broche de contrôle est montée sur la tige mobile à l'aide d'un système de compliance passive pour faciliter l'insertion de la broche de contrôle à l'intérieur de récipients présentant des goulots penchés ou mal alignés,
- le dispositif comporte un système de fixation au châssis d'une machine d'inspection, le système de fixation étant compilant pour autoriser un débattement angulaire ou en translation entre ledit dispositif et ledit châssis de la machine, en vue de faciliter l'insertion de la broche de contrôle à l'intérieur de récipients présentant des goulots penchés ou mal alignés.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue en perspective montrant un exemple de réalisation d'un dispositif d'inspection conforme à l'invention.
Les **Figures 2** et **3** sont des vues en coupe élévation schématiques du dispositif d'inspection conforme à l'invention en position respectivement haute et en position de contrôle d'un récipient.

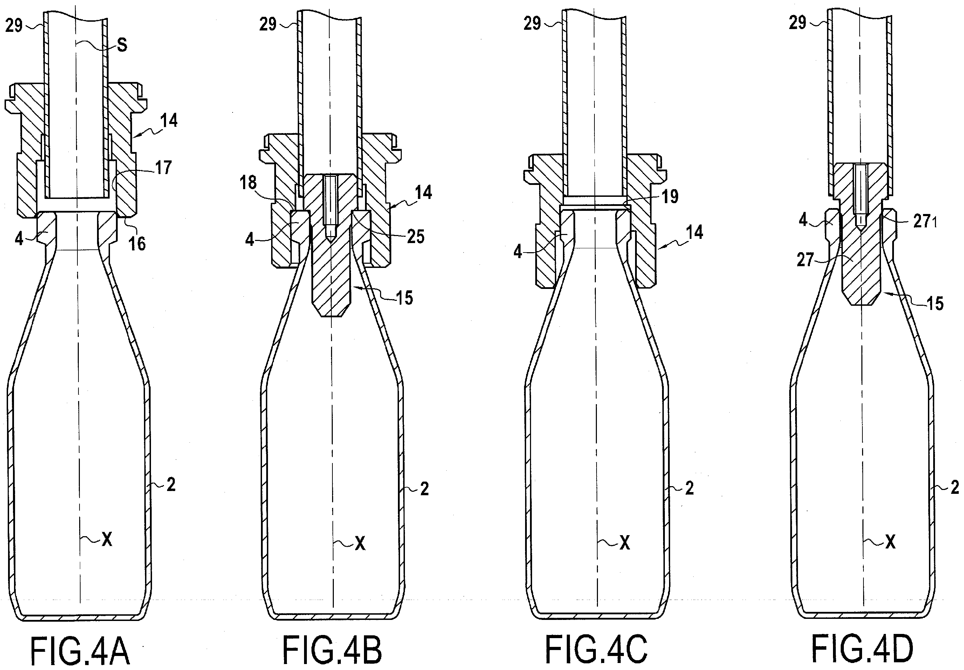

Les **Figures 4A** à **4H** sont des vues en coupe élévation montrant différentes configurations du dispositif d'inspection correspondant respectivement à un contrôle du diamètre de bague mauvais correspondant à une bague trop grande, un débouchage correct et un diamètre bague correct, un contrôle du diamètre de bague mauvais correspondant à une bague trop petite, un débouchage mauvais correspondant à débouchage trop petit, un débouchage mauvais correspondant à un débouchage trop grand, un débouchage mauvais correspondant à un débouchage col bouché, un dégagement des outillages et une détection correspondant à l'absence d'un récipient.

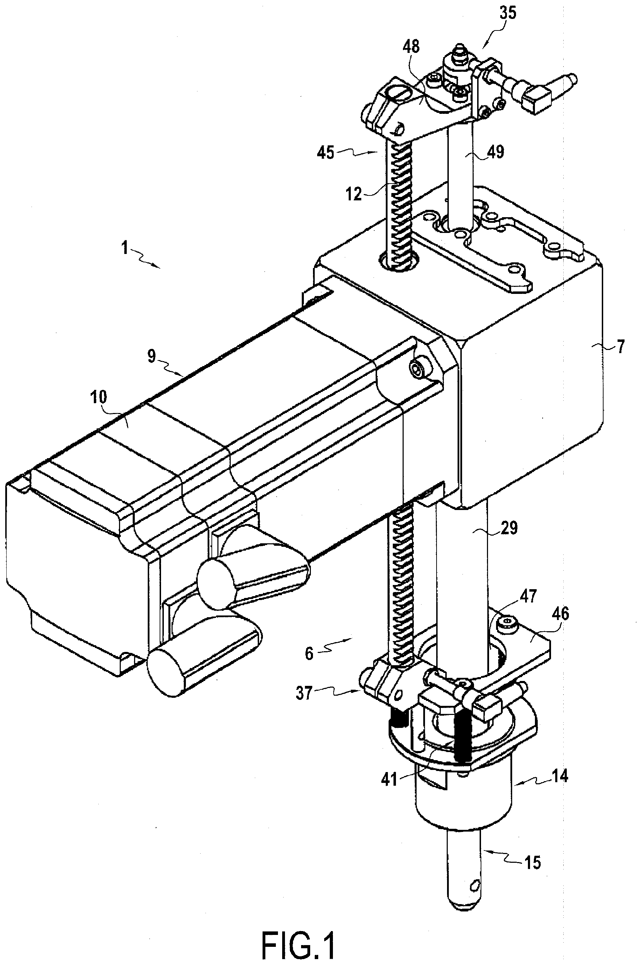

Tel que cela ressort plus précisément des **Fig. 1** à **3**, l'objet de l'invention concerne un dispositif d'inspection **1** permettant d'inspecter à haute cadence, des récipients creux **2** de toute nature appropriée par exemple en verre présentant un axe de symétrie **X**. De manière classique, chaque récipient **2** présente un col **3** pourvu d'une bague **4** délimitant intérieurement une ouverture **5** d'accès à l'intérieur du récipient **2.** De manière plus précise, le dispositif d'inspection **1** permet de contrôler le col **3** et la bague **4** de récipients **2** afin de déterminer la conformité dimensionnelle des bagues et des cols des récipients et le type de défauts pour les récipients dimensionnellement non-conformes.

Le dispositif d'inspection **1** est destiné à équiper toute machine de production de récipients qui sont amenés à haute cadence, au droit du dispositif d'inspection **1** à l'aide de tous moyens appropriés. La machine de production et les moyens d'amenée du récipient jusqu'au dispositif d'inspection **1** et les moyens de manutention des récipients ne sont pas décrits car ils sont bien connus de l'homme du métier et ne font pas partie précisément de l'objet de l'invention. Le dispositif d'inspection **1** est monté sur le châssis d'une machine d'inspection intégrée ou rapportée dans la machine de production. Dans l'exemple illustré, il est à noter que les récipients **2** sont amenés au droit du système d'inspection **1** en étant dans une position dressée ou verticale de sorte que l'axe **X** de symétrie de la bouteille peut être considéré comme s'étendant selon une direction verticale.

Le dispositif d'inspection **1** comporte un équipage **6** mobile par rapport à un bâti porteur **7**. L'équipage mobile **6** est entraîné par un système de motorisation **9** pour assurer le déplacement alternatif de l'équipage mobile dans une direction de déplacement parallèle à l'axe de symétrie **X** des récipients **2**. Dans l'exemple illustré, l'équipage mobile **6** présente ainsi pour chaque récipient **2**, un mouvement de descente et un mouvement de remontée selon une direction de déplacement vertical puisque la bouteille **2** occupe une position dressée lors de son inspection par le dispositif **1** selon l'invention. Bien entendu, le dispositif **1** est apte à inspecter les bouteilles placées dans des positions différentes.

Selon une caractéristique préférée de réalisation, le système de motorisation **9** comporte un servomoteur **10** dont le corps est fixé sur le bâti porteur **7**. Le servomoteur **10** est pourvu d'un pignon de sortie **11** coopérant avec une crémaillère **12** faisant partie de l'équipage mobile **6.** Le servomoteur **10** est piloté pour entraîner en rotation le pignon de sortie **11** dans un sens et dans un sens contraire pour imprimer de manière cyclique, à la crémaillère **12**, un mouvement de descente et un mouvement de remontée, selon l'axe vertical.

L'équipage mobile **6** comporte un calibre externe **14** de contrôle de l'extérieur de la bague **4** des récipients et un calibre interne **15** de contrôle de l'intérieur de la bague et du col des récipients **2**. Comme cela sera expliqué dans la suite de la description, les calibres **14**, **15** sont entraînés en déplacement alternatif par l'équipage mobile **6** pour venir en contact avec le récipient **2** au cours du mouvement de descente de l'équipage mobile **6.**

Plus précisément, les calibres **14**, **15** sont montés de manière concentrique et possèdent un axe commun de symétrie **S** s'étendant selon une direction verticale de manière qu'en position d'inspection, l'axe de symétrie **X** du récipient **2** et l'axe de symétrie **S** soient alignés. A chaque mouvement de descente de l'équipage mobile **6** selon l'axe vertical **S**, les calibres **14**, **15** contrôlent les dimensions de la bague et du col du récipient présent. Le mouvement de remontée de l'équipage mobile est mis à profit pour enlever le récipient contrôlé et à amener le prochain récipient à inspecter.

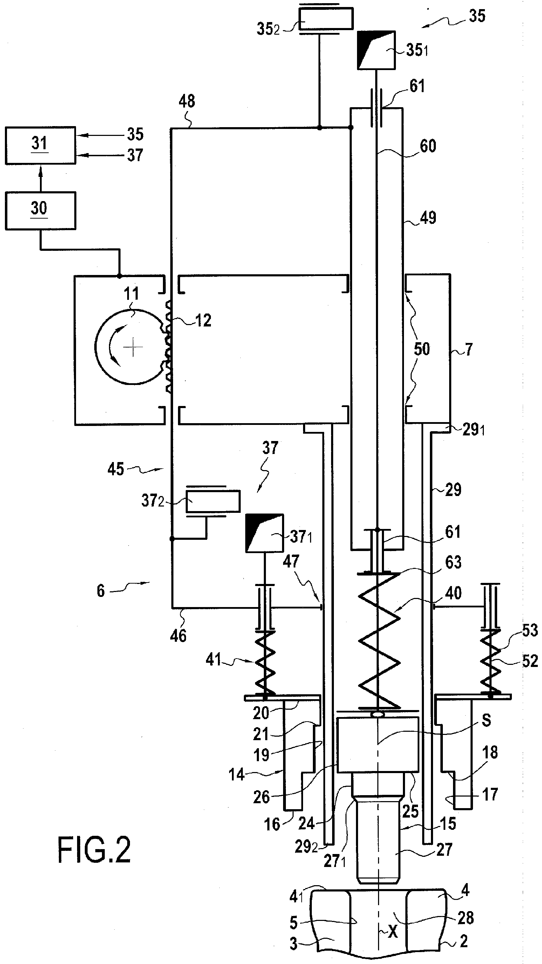

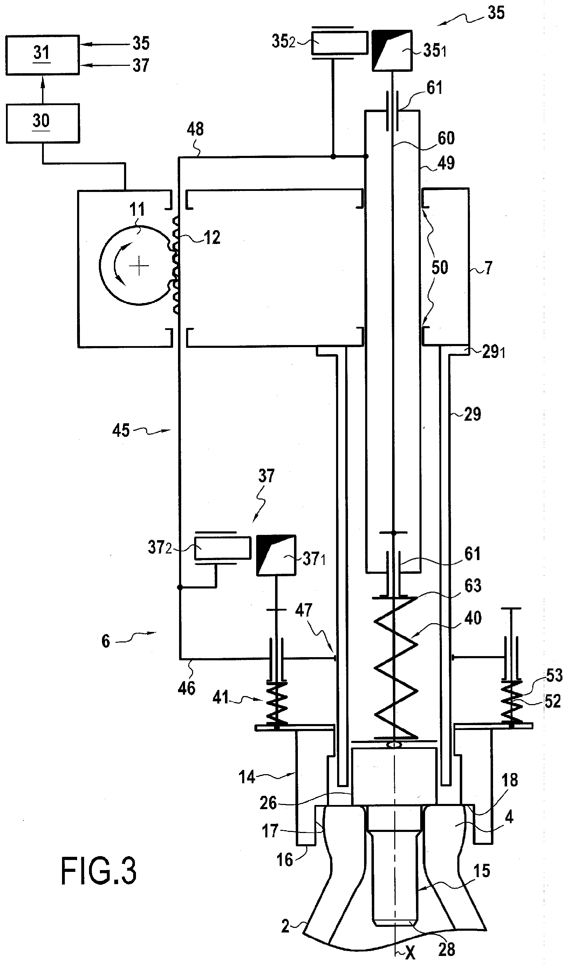

Tel que cela ressort plus précisément des **Figures 2** et **3****,** le calibre externe **14** se présente sous la forme d'une cloche de forme annulaire centrée sur l'axe de symétrie **S.** Le calibre externe **14** présente une extrémité inférieure dite d'introduction **16** délimitant une ouverture ou un alésage de calibrage **17.** Le diamètre interne de cet alésage de calibrage **17** est égal au plus grand diamètre pouvant être toléré pour la bague **4** d'un récipient. Ainsi, comme illustré sur la **Fig. 4A****,** si la bague **4** du récipient présente un diamètre supérieur au diamètre de l'alésage de calibrage **17** (bague trop grande), alors la bague **4** du récipient vient en butée sur l'extrémité inférieure **16** du calibre externe **14.**

L'alésage de calibrage **17** est limité par un épaulement intérieur **18** destiné à venir en contact ou en appui sur le buvant ou le rebord **4₁** de la bague **4.**

Selon une variante préférée de réalisation, le calibre externe **14** comporte également une ouverture ou alésage d'échappement **19** aménagé au-delà de l'épaulement **18** et communiquant avec l'ouverture de calibrage **17** et débouchant à la deuxième extrémité **20** du calibre externe opposée à la première extrémité inférieure **16.** Cet alésage d'échappement **19** est pourvu d'un épaulement d'arrêt **21** situé entre la deuxième extrémité **20** et l'épaulement **18.**

Ainsi, l'alésage de calibrage **17** et l'alésage d'échappement **19** délimitent entre eux, l'épaulement annulaire **18** dont la largeur correspond à la plage de tolérance pour des largeurs de bagues **4** conformes **(****Fig. 4B****).** En d'autres termes, dans tous les cas où la bague **4** présente un diamètre conforme alors le calibre externe **14** vient en appui par son épaulement **18** sur le rebord **4₁** de la bague **4.** Dans le cas où la bague **4** présente un diamètre inférieur au diamètre de l'alésage d'échappement **19 (****Fig. 4C****),** l'alésage d'échappement **19** du calibre externe **14** reçoit la bague **4** qui vient ensuite en contact avec le calibre externe **14** soit avec l'extrémité inférieure **16** soit avec l'épaulement d'arrêt **21.**

Le calibre interne **15** se présente sous la forme d'une broche ou d'une jauge montée à l'intérieur du calibre externe **14** et de manière concentrique par rapport au calibre externe **14.** Le calibre **15** qui présente une forme symétrique centrée sur l'axe de symétrie **S,** délimite un tronçon inférieur **24** séparé par un épaulement **25** d'un tronçon supérieur **26.** Le diamètre du tronçon supérieur **25** est supérieur au diamètre présenté par le tronçon inférieur **24.** Le diamètre du tronçon inférieur **24** présente un diamètre correspondant au diamètre minimal pouvant être toléré par le goulot du récipient **2** alors que le diamètre du tronçon supérieur **26** correspond au diamètre maximal pouvant être toléré pour le goulot du récipient. Ainsi, l'épaulement annulaire **25** qui est délimité entre les tronçons supérieur **26** et inférieur **24** présente une largeur correspondant à la plage de tolérance pour le diamètre interne du col du récipient. Dans le cas où le col **3** présente un diamètre qui est dans la plage de tolérance, le calibre interne **15** vient en butée par son épaulement **25** sur le rebord **4₁** de la bague **(****Fig. 4B****).**

Selon une variante préférée de réalisation, le calibre interne **15** comporte également à partir du tronçon inférieur **24** un tronçon d'extrémité **27** présentant un diamètre inférieur par rapport au diamètre du tronçon inférieur **24.** Le tronçon d'extrémité **27** possède une extrémité libre **28** ou de butée présentant un chanfrein. Le tronçon d'extrémité **27** délimite avec le tronçon inférieur **24,** un collier de raccordement **27₁.**

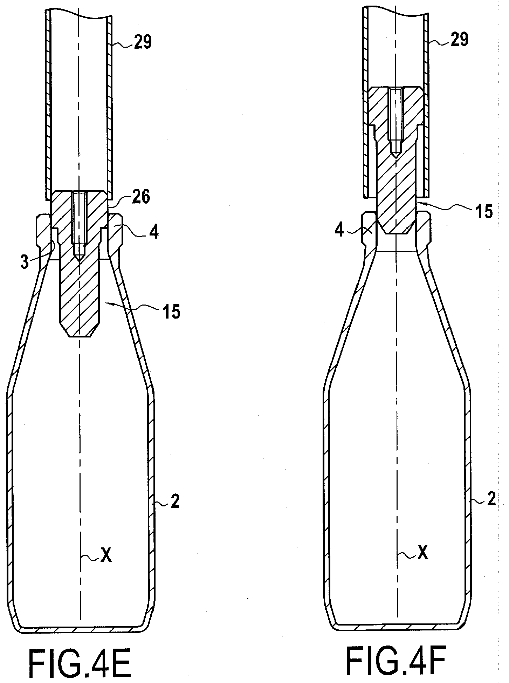

Lorsque le col **3** du récipient **2** présente un diamètre trop petit, alors la broche vient en butée par son tronçon d'extrémité **27** et en particulier par son collier de raccordement **27₁** sur le récipient **2 (****Fig. 4D****).** Si le diamètre interne du col **3** est supérieur au diamètre maximal de la plage de tolérance alors le tronçon supérieur **26** pénètre à l'intérieur du col **3** du récipient **2** (**Fig. 4E**). Par ailleurs, dans le cas où le col du récipient présente un défaut de bouchage **(****Fig. 4F**), le calibre interne **15** vient en butée au niveau du rebord de la bague, par le tronçon d'extrémité **27.**

Selon une caractéristique préférée de réalisation, un tube extracteur **29** est interposé entre le calibre externe **14** et le calibre interne **15.** Ce tube extracteur **29** comporte une première extrémité **29₁** fixée au bâti **7** de manière que son axe de symétrie longitudinal se trouve confondu avec l'axe de symétrie **S.** Le tube extracteur **29** comporte une deuxième extrémité **29₂** opposée à la première extrémité **29₁,** s'étendant entre le calibre interne **15** et le calibre externe **14.** En d'autres termes, le calibre externe **14** s'étend à l'extérieur du tube extracteur **29** tandis que le calibre interne **15** s'étend à l'intérieur du tube extracteur **29.**

Le diamètre du tube extracteur **29** est adapté pour permettre de venir en contact sur le rebord **4₁** de la bague **4** en cas de remontée du récipient avec l'équipage mobile **6** permettant de dégager le récipient par rapport à l'équipage mobile **6.** Bien entendu, le tube extracteur **29** présente une longueur adaptée pour permettre aux calibres **14, 15** de venir s'étendre au-delà de sa deuxième extrémité **29₂** lorsque les calibres viennent en contact avec le récipient **2.** Dans le même sens, l'épaisseur du tube extracteur **29** est réduite pour ne pas gêner le contrôle des calibres **14, 15** destinés à venir également en appui sur le rebord **4₁** de la bague **4.**

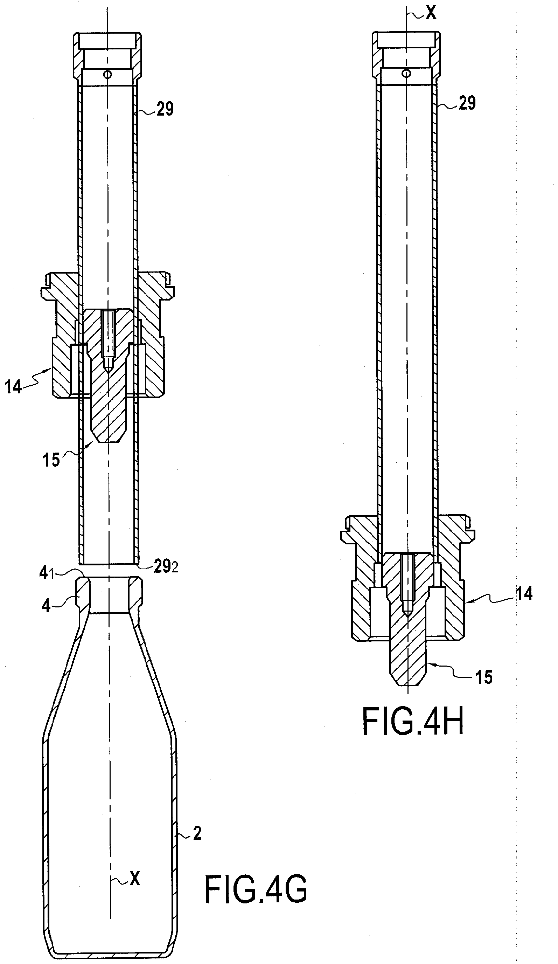

Si le récipient **2** se trouve coincé avec l'un et/ou l'autre des calibres, le récipient **2** va être entraîné par l'équipage mobile **6** lors de son mouvement de remontée. Lors de ce mouvement de remontée, le récipient **2** vient en butée, par son rebord **4₁,** sur l'extrémité inférieure **29₂** du tube extracteur, ce qui entraîne la désolidarisation du récipient **2** par rapport à l'équipage mobile **6** qui poursuit son mouvement de remontée (**Fig. 4G**).

Il doit être noté que le calibre externe **14** et le calibre interne **15** détectent chaque défaut à un niveau donné de leur déplacement selon l'axe vertical qui est différent d'un défaut à l'autre. Ainsi, le calibre interne **15** occupe par exemple une altitude plus haute lors de la détection d'un col bouché (**Fig. 4F**) par rapport à l'altitude occupée lorsque le calibre interne **15** détecte un col avec des dimensions correctes (**Fig. 4B**). De même, le calibre externe **14** occupe, lors de la détection d'un diamètre de bague trop grand (**Fig. 4A**), une position qui à une altitude supérieure par rapport à la position occupée par ledit calibre externe **14** lors de la détection d'un diamètre de bague trop petit (**Fig. 4C**).

Le dispositif d'inspection **1** comporte également un système **30** de mesure de la position de l'équipage mobile **6** par rapport au bâti dans la direction de déplacement de l'équipage mobile. Ce système **30** peut être réalisé par tous moyens permettant de connaître la position, selon l'axe de déplacement, de l'équipage mobile **6.** Selon une variante préférée de réalisation, le système de mesure **30** comporte un capteur de position faisant partie du servomoteur **11.** Un tel système de mesure **30** permet ainsi de connaître la position de l'équipage mobile **6** et par suite des calibres interne **15** et externe **14** par rapport au bâti **7,** selon la direction verticale dans l'exemple illustré. En d'autres termes, un tel système de mesure **30** permet de donner selon un repère de distance s'établissant selon l'axe vertical, l'abscisse de l'équipage mobile **6** par rapport à une origine.

Ce système de mesure **30** est relié à une unité de traitement **31** de tous types connus en soi par exemple se présentant sous la forme d'un micro-ordinateur. Le système de mesure **30** fournit ainsi à l'unité de traitement **31**, les mesures de la position de l'équipage mobile **6.** Dans la mesure où la position des calibres **14**, **15** est connue par rapport à l'équipage mobile **6**, l'unité de traitement **31** connaît la position des calibres **14**, **15** par rapport au bâti fixe.

Le système d'inspection **1** comporte également un système **35** de détection du contact intervenant entre le calibre interne **15** et le récipient **2** lors du mouvement de l'équipage mobile **6.** Ce système de détection **35** est relié à l'unité de traitement **31.** L'unité de traitement **31** est ainsi apte à connaître les occurrences de contact entre le calibre interne **15** et le récipient **2.**

Le système d'inspection **1** comporte également un système de détection **37** du contact intervenant entre le calibre externe **14** et le récipient **2** lors du mouvement de l'équipage mobile **6.** Ce système de détection **37** est relié à l'unité de traitement **31.** Cette unité de traitement **31** est ainsi apte à connaître les occurrences de contact entre le calibre externe **14** et le récipient **2.**

Les systèmes de détection **35**, **37** sont réalisés par tous moyens appropriés. De préférence, chaque système de détection **35**, **37** comporte des capteurs de présence ou de proximité, de préférence de type magnétique.

Selon une variante avantageuse de réalisation, le calibre externe **14** et le calibre interne **15** sont montés mobiles selon la direction de déplacement de manière indépendante l'un de l'autre et par rapport à l'équipage mobile **6.** En d'autres termes, il doit être compris que chaque calibre **14**, **15** comporte une possibilité de déplacement individuel selon la direction de déplacement vertical lors du contact du calibre avec le récipient **2.**

De manière avantageuse, le dispositif d'inspection **1** comporte un mécanisme **40** dit interne d'amortissement du contact entre le récipient **2** et le calibre interne **15** et de rappel en position dudit calibre interne. Le dispositif d'inspection **1** comporte également un mécanisme **41** dit externe d'amortissement du contact entre le récipient **2** et le calibre externe **14** et de rappel en position du calibre externe. Chaque mécanisme d'amortissement et de rappel **40**, **41** est ainsi apte d'une part, à amortir le contact intervenant entre un calibre **14**, **15** et le récipient **2** et d'autre part, à ramener chaque calibre **14**, **15** dans sa position initiale ou de repos en l'absence de contact avec le récipient **2.**

Tel que cela ressort plus précisément des **Fig. 2** et **3**, le calibre externe **14** et le calibre interne **15** sont montés mobiles selon la direction de déplacement par rapport à un support **45** de l'équipage mobile **6.** Ce support **45** qui est bien entendu mobile par rapport au bâti fixe **7** comporte la crémaillère **12** dont l'extrémité inférieure est montée solidaire d'une pièce **46** assurant le maintien et le guidage du calibre externe **14.** Cette pièce de guidage **46** se présente dans l'exemple illustré, sous la forme d'une plaque pourvue d'un trou de passage **47** pour le tube extracteur **29** autorisant ainsi le mouvement de coulissement vertical de la plaque **46** par rapport au tube extracteur **29** fixe. L'extrémité supérieure de la crémaillère **12** est montée solidaire, par une pièce de liaison **48**, à une chemise de guidage **49** s'étendant sensiblement parallèlement à la crémaillère **12.** Cette chemise **49** est guidée en coulissement vertical par rapport au bâti **7** par des organes de guidage **50** de tous types connus en soi. La chemise **49** est montée de manière à s'étendre au moins en partie à l'intérieur du tube extracteur **29.**

Le support **45** est formé ainsi par la crémaillère **12**, la pièce de liaison **48**, la chemise **49** et la plaque **46.** Le calibre externe **14** et le calibre interne **15** sont montés mobiles indépendamment l'un de l'autre par rapport à ce support **45** et à l'aide d'un mécanisme d'amortissement et de rappel respectivement **41**, **40**.

Ainsi, le calibre externe **14** est pourvu, en tant que mécanisme d'amortissement et de rappel **41**, d'au moins un et dans l'exemple illustré de trois axes de guidage **52** montés mobiles par rapport à la plaque **46.** Chaque axe **52** est pourvu d'un ressort de rappel **53** interposé entre le calibre externe **14** et la plaque **46** pour ramener en position de repos, le calibre externe **14.**

En l'absence de contact entre le calibre externe **14** et la bague **4** d'un récipient, le calibre externe **14** occupe, par rapport au support **45**, une position de repos fixée par les ressorts de rappel **53** et une butée portée par les axes **52** et venant en appui sur la plaque **46** (**Fig. 2**). Lors du contact entre le calibre externe **14** et la bague **4**, le calibre externe **14** est soumis à un effort conduisant à une remontée du calibre externe **14** par rapport au support **45**, conduisant à la compression des ressorts de rappel **53** (**Fig. 3**). Lors de la remontée de l'équipage mobile **6**, l'appui de la bague **4** sur le calibre externe **14** disparaît de sorte que les ressorts de rappel **53** provoquent le retour du calibre externe **14** à sa position initiale de repos.

Le mécanisme d'amortissement et de rappel **40** comporte une tige **60** présentant une première extrémité inférieure montée solidaire du calibre interne **15.** Cette tige **60** est montée à l'intérieur de la chemise **49** qui assure par tous moyens de guidage appropriés **61**, le guidage en coulissement de la tige **60** par rapport à la chemise **49.**

Cette tige **60** comporte avantageusement entre le calibre interne **15** et l'extrémité inférieure de la chemise **49**, un ressort **63.** En l'absence de contact entre le calibre interne **15** et le récipient **2**, le ressort **63** agit sur le calibre interne **15** afin que ce dernier occupe une position de repos par rapport à la chemise de guidage **49.** La tige **60** est maintenue dans cette position à l'aide d'une butée portée par la tige et venant en appui sur la chemise **49** (**Fig. 2**). Dans le cas d'un appui du calibre interne **15** sur la bague **4**, le calibre interne **15** est soumis à un effort conduisant à une remontée de la tige **60** par rapport à la chemise de guidage **49** (**Fig. 3**). Lors de la suppression de l'appui du calibre **15** sur la bague **4**, le ressort **63** tend à ramener le calibre interne **15** à sa position initiale de repos.

Selon une variante préférée de réalisation, le système de détection **37** du contact intervenant entre le calibre externe **14** et le récipient **2** est monté entre le support **45** et le calibre externe **14.** Ainsi, le système de détection **37** comporte une partie mobile **37₁** de détection montée sur l'extrémité d'un axe de guidage **52** et une partie fixe **37₂** montée sur la crémaillère **12.** Lorsqu'un contact intervient entre le calibre externe **14** et le récipient **2**, l'axe **52** coulisse par rapport à la crémaillère **12** conduisant à une modification de position relative entre les parties fixe **37₂** et mobile **37₁** du système de détection (**Fig. 3**). Ainsi, le système de détection **37** détecte l'occurrence de contact intervenant entre le calibre externe **14** et le récipient **2.**

Selon une variante préférée de réalisation, le système de détection **35** du contact intervenant entre le calibre **15** et le récipient **2** est monté entre le support **45** et le calibre interne **15.** Avantageusement, ce système de détection **35** est déporté par rapport au calibre interne **15.** En effet, la tige **60** est équipée à son extrémité opposée de celle pourvue du calibre interne **15,** d'une partie mobile **35₁** de détection faisant partie du système de détection **35** qui comporte également une partie fixe **35₂** fixée sur la pièce de liaison **48.** Lorsqu'un contact intervient entre le calibre interne **15** et le récipient **2**, la tige **61** coulisse par rapport à la pièce de liaison **48** conduisant à une modification de position relative entre les parties fixe **35₂** et mobile **35₁** du système de détection. Ainsi, le système de détection **35** détecte les occurrences de contact entre le calibre interne **15** et la bague du récipient **2.**

Les occurrences de contact détectées par les systèmes de détection **35**, **37** sont transmises à l'unité de traitement **31** qui est apte, à partir des mesures délivrées par le système **30** de mesure de la position de l'équipage mobile **6**, à déterminer la conformité dimensionnelle des bagues et des cols des récipients **2.** En effet, chaque position de contact des calibres **14**, **15** correspond à un contrôle dimensionnel différent de la bague et du col du récipient. A l'aide d'une opération d'étalonnage, il est possible de connaître la position théorique verticale des calibres **14, 15** correspondant à un récipient sans défaut et par suite à un récipient avec défaut.

Dans la mesure où la position de l'équipage mobile **6** est connue par rapport au bâti **7** c'est-à-dire aussi par rapport au plan de pose des récipients **2**, l'unité de traitement **31** est apte à déterminer la hauteur des récipients à partir de l'occurrence de contact du calibre externe **14** sur la bague du récipient et/ou de l'occurrence de contact du calibre interne **15.**

Le fonctionnement du dispositif d'inspection **1** découle directement de la description qui précède.

Après l'amenée d'un récipient **2** au droit du dispositif d'inspection **1,** le système de motorisation **9** est piloté pour assurer la descente de l'équipage mobile **6.** Dès qu'un calibre **14, 15** rentre en contact avec le récipient **2,** le contact est détecté à l'aide du système de détection associé **35**, **37.** A cet instant, l'unité de traitement **31** connaît, à l'aide du système de mesure **30**, la position du calibre rentrant en contact avec le récipient de sorte que l'unité de traitement **31** est en mesure de déterminer la conformité dimensionnelle du récipient et le type de défaut détecté pour des récipients dimensionnellement non-conformes. De façon avantageuse, l'unité de traitement **31** connaît, en fonction des occurrences de contact des deux calibres **14**, **15** et du système de mesure **30**, la position de l'équipage mobile **6** au moment des contacts des calibres **14**, **15** avec le récipient **2.** L'unité de traitement **31** effectue, à l'aide de ces mesures et occurrences, des calculs donnant des informations dimensionnelles complémentaires sur les cols et les bagues des récipients **2** et en particulier sur les types de défauts présentés par les récipients **2.**

Ainsi, en fonction de la position verticale occupée par chacun des calibres **14**, **15** lorsqu'intervient au moins un contact avec le récipient, l'unité de traitement **31** est apte à déterminer précisément la conformité dimensionnelle de la bague et du col du récipient. Comme expliqué ci-avant, en fonction de la position verticale occupée par chacun des calibres **14**, **15** lorsqu'intervient au moins un contact avec le récipient, l'unité de traitement **31** est apte à déterminer précisément la conformité dimensionnelle de la bague et du col du récipient, car il est possible de déterminer le type de défaut parmi les défauts suivants :
- défaut de diamètre intérieur du col inférieur à un diamètre minimal toléré (défaut dit de brochage ou PLUG ou bore),
- défaut de diamètre de débouchage inférieur à un diamètre minimal toléré (défaut dit de débouchage),
- défaut de diamètre de débouchage supérieur à un diamètre maximal toléré (défaut dit de débouchage),
- défauts de hauteur supérieure au maximum toléré,
- défauts de hauteur inférieure au minimum toléré,
- défaut de diamètre extérieur inférieur au minimum toléré,
- défaut de diamètre extérieur supérieur au maximum toléré.

Il est à noter qu'à l'aide des occurrences de contact de l'un et/ou l'autre des calibres **14**, **15** avec le récipient **2**, l'unité de traitement **31** peut, selon la position mesurée de l'équipage mobile **6**, commander l'inversion du sens de déplacement du système de motorisation visant à faire remonter l'équipage mobile **6.** En pratique, pour des récipients conformes dimensionnellement, les calibres **14**, **15** rentrent en contact sensiblement simultanément avec le récipient **2.** En cas d'absence d'un récipient (**Fig. 4H**), aucun des systèmes de détection **35**, **37** ne détecte un contact. L'unité de traitement **31** est apte à commander la remontée de l'équipage mobile **6** en pilotant le système de motorisation **9**, lorsque l'équipage mobile **6** atteint une position verticale basse déterminée au préalable.

Le dispositif d'inspection **1** selon l'invention permet d'inspecter les bagues et les cols de tous types de récipients. Le plus souvent, le dispositif d'inspection **1** est monté sur le châssis d'une machine d'inspection dont les moyens d'amenée sont un convoyeur à étoile.

En théorie, lorsque les récipients **2** sont positionnés en vue de leur contrôle par le dispositif d'inspection **1**, l'axe de symétrie **X** des récipients coïncide avec l'axe de déplacement des calibres **14** et **15.** Toutefois en pratique, il faut considérer que des erreurs de positionnement des récipients sont possibles, ou bien que des goulots de récipient peuvent être penchés. Il est donc nécessaire de donner au dispositif **1** une capacité de compliance ou d'élasticité. Selon une variante de l'invention, le système de fixation du dispositif **1** qui relient physiquement le bâti **7** au châssis de la machine d'inspection, sont capables de flexibilité, c'est-à-dire qu'ils autorisent des déplacements limités du dispositif **1** par rapport au châssis de la machine d'inspection. Les degrés de liberté autorisés sont soit deux rotations d'axes perpendiculaires entre eux et perpendiculaires à l'axe **X**, soit deux translations perpendiculaires entre elles et perpendiculaires à l'axe **X**, soit des mouvements plus complexes tels qu'une trajectoire circulaire autour de l'axe de rotation de l'étoile de la machine, et une translation selon un axe passant par l'axe de rotation de l'étoile. Ces forcent de rappel ramènent automatiquement le dispositif au repos dans une position d'alignement sur l'axe **X** théorique.

De préférence, le système de fixation présente une compliance à caractère passif. En effet, les moyens matériels pour fournir cette élasticité sont de préférence des supports élastiques, c'est-à-dire dans lesquels des pièces en métal rigides sont liées entre elles par des pièces en matériau flexibles et élastiques ou compressibles et résilients, par exemple des polymères, qui autorisent des rotations selon un axe horizontal tangentiel à l'étoile et un axe horizontal radial par rapport à l'étoile, la liberté de mouvement étant supérieure pour la rotation d'axe radial. Il est toutefois possible de prévoir des sous-ensembles mécaniques plus complexes qui comprennent des guidages mécaniques, des butées et des ressort de rappel.

Selon une variante préférée de l'invention, la tige **60** est montée solidaire de la broche interne **15** par l'intermédiaire d'un système présentant également une certaine flexibilité qui permet au calibre de prendre un angle limité avec l'axe de la tige et/ou l'axe **X,** ce qui facilite son insertion dans le goulot. Ainsi, la broche de contrôle **15** est montée sur la tige mobile **60** à l'aide d'un système de compliance passive pour faciliter l'insertion de la broche de contrôle à l'intérieur de récipients **2** présentant des goulots penchés ou mal alignés.

L'invention n'est pas limitée aux exemples décrits et représentés car diverses modifications peuvent y être apportées sans sortir de son cadre, tel que défini par les revendications.

## Revendications

1. Dispositif d'inspection (1) pour les bagues et cols de récipients (**2**), comportant un équipage mobile (**6**) entrainé par un système de motorisation (**9**) selon un mouvement alternatif par rapport à un bâti (**7**), dans une direction de déplacement parallèle à l'axe de symétrie d'un récipient lors de son inspection par le dispositif d'inspection (1), l'équipage mobile étant équipé d'un calibre externe (**14**) de contrôle de l'extérieur de la bague des récipients et d'un calibre interne (**15**) de contrôle de l'intérieur de la bague et du col des récipients, **caractérisé en ce que** le dispositif d'inspection (1) comporte en outre:
- une unité de traitement (31),
- un système (**30**) de mesure de la position de l'équipage mobile (**6**) par rapport au bâti, dans la direction de déplacement, les mesures de la position de l'équipage mobile étant fournies à l'unité de traitement (**31**),
- un système de détection (**35**) du contact intervenant entre le calibre interne (**15**) et le récipient (**2**), lors du mouvement de l'équipage mobile (**6**), les occurrences de contact étant fournies à l'unité de traitement (**31**),
- un système de détection (**37**) du contact intervenant entre le calibre externe (**14**) et le récipient (**2**), lors du mouvement de l'équipage mobile, les occurrences de contact étant fournies à l'unité de traitement (**31**),
- l'unité de traitement (**31**) étant adaptée à déterminer la conformité dimensionnelle des bagues et/ou cols des récipients et les types de défauts pour les récipients dimensionnellement non conformes en fonction des mesures de la position de l'équipage mobile (**6**) et des occurrences de contact entre les calibres (**14**, **15**) et le récipient (2).

2. Dispositif d'inspection selon la revendication 1, **caractérisé en ce que** l'équipage mobile (**6**) comporte un support mobile (**45**) par rapport auquel le calibre externe (**14**) et le calibre interne (**15**) sont montés mobiles selon la direction de déplacement et indépendamment l'un de l'autre.

3. Dispositif d'inspection selon la revendication 1, **caractérisé en ce que** le bâti (**7**) comporte un tube extracteur (**29**) présentant une première extrémité solidaire du bâti (**7**) et une deuxième extrémité opposée à la première destinée à venir en appui sur le bord de la bague (**4**) du récipient (**2**) en cas de remontée accidentelle du récipient, les calibres interne (**15**) et externe (**14**) dépassant de la deuxième extrémité du tube extracteur, en s'étendant respectivement à l'intérieur et à l'extérieur dudit tube extracteur.

4. Dispositif d'inspection selon la revendication 1, **caractérisé en ce que** l'unité de traitement (**31**) réalise, en fonction des mesures de la position de l'équipage mobile (**6**) et des occurrences de contact entre les calibres (**14**, **15**) et le récipient (**2**), des calculs donnant des informations dimensionnelles complémentaires sur les cols et les bagues des récipients (**2**).

5. Dispositif d'inspection selon la revendication 1 ou 4, **caractérisé en ce que** l'unité de traitement (**31**) calcule à partir des informations délivrées par le système de mesure (**30**) et les systèmes de détection (**35**, **37**), la hauteur des récipients.

6. Dispositif d'inspection selon la revendication 1, 4 ou 5, **caractérisé en ce que** l'unité de traitement (**31**) commande l'inversion du sens de déplacement du système de motorisation (**9**), à l'aide des occurrences de contact de l'un et/ou l'autre des calibres (**14**, **15**) avec le récipient (**2**).

7. Dispositif d'inspection selon l'une des revendications 1 à 6, **caractérisé en ce qu'**il comporte des mécanismes (**40**, **41**) d'amortissement du contact entre le récipient (**2**) et chaque calibre (**14**, **15**) et de rappel en position desdits calibres.

8. Dispositif d'inspection selon la revendication 1, **caractérisé en ce que** les systèmes de détection (**35**, **37**) du contact comportent des capteurs de présence ou de proximité, de préférence de type magnétique.

9. Dispositif d'inspection selon l'une des revendications 3 à 8, **caractérisé en ce que** le calibre interne (**15**) comporte une tige (**60**) mobile par rapport au support (**45**) et guidée en translation à l'intérieur d'une chemise (**49**) montée à l'intérieur du tube extracteur (**29**), cette tige (**60**) étant pourvue à une première extrémité d'une broche de contrôle (**15**) et à sa deuxième extrémité déportée par rapport à la broche de contrôle, d'au moins une partie **(35₁)** du système de détection (**35**) du contact intervenant entre le calibre (**15**) interne et le récipient (**2**).

10. Dispositif d'inspection selon l'une des revendications 3 à 8, **caractérisé en ce que** le calibre externe (**14**) comporte une cloche de contrôle entourant le tube extracteur (**29**) et montée mobile par rapport au support (**45**) de l'équipage mobile.

11. Dispositif d'inspection selon la revendication 10, **caractérisé en ce que** la cloche de contrôle (**14**) est pourvue d'au moins un axe mobile (**52**) guidé par rapport au support mobile (**45**) et munie en tant que mécanisme d'amortissement (**41**), d'au moins un ressort (**53**) interposé entre la cloche de contrôle et le support (**45**), l'axe mobile étant pourvu d'au moins une partie (**37₁**) du système de détection (**37**) du contact intervenant entre le calibre externe (**14**) et le récipient (**2**).

12. Dispositif d'inspection selon la revendication **11, caractérisé en ce que** le support mobile (**45**) de l'équipage mobile (**6**) comporte une pièce (**46**) traversée par le tube extracteur (**29**) et assurant le guidage du ou des axes de guidage (**52**) de la cloche de contrôle.

13. Dispositif d'inspection selon l'une des revendications 2 à 12, **caractérisé en ce que** le support (**45**) de l'équipage mobile (**6**) comporte une crémaillère (**12**) reliée à l'une de ses extrémités à la pièce (**46**) de guidage de la cloche de contrôle et à son extrémité opposée, à la chemise de guidage (**49**) de la tige (**61**) supportant la broche de contrôle (**15**).

14. Dispositif d'inspection selon la revendication 13, **caractérisé en ce que** la crémaillère (**12**) est entrainée en translation alternative par le système de motorisation (**9**) comportant de préférence un servomoteur.

15. Dispositif d'inspection selon la revendication 14, **caractérisé en ce que** le système de motorisation (**9**) comporte un capteur de rotation faisant partie du système de mesure (**30**) de la position de l'équipage mobile (**6**) par rapport au bâti (**7**).

16. Dispositif d'inspection selon la revendication 9, **caractérisé en ce que** la broche de contrôle (**15**) est montée sur la tige mobile (**60**) à l'aide d'un système de compliance passive pour faciliter l'insertion de la broche de contrôle à l'intérieur de récipients (**2**) présentant des goulots penchés ou mal alignés.

17. Dispositif d'inspection selon l'une des revendications 1 à 16 **caractérisé en ce qu'**il comporte un système de fixation au châssis d'une machine d'inspection, le système de fixation étant compliant pour autoriser un débattement angulaire ou en translation entre ledit dispositif (**1**) et ledit châssis de la machine, en vue de faciliter l'insertion de la broche de contrôle à l'intérieur de récipients (**2**) présentant des goulots penchés ou mal alignés.

## Patentansprüche

1. Prüfvorrichtung (1) für die Ringe und Hälse von Behältern (2), umfassend eine bewegliche Einrichtung (6), die durch ein Motorisierungssystem (9) in einer hin- und hergehenden Bewegung in Bezug auf ein Gestell (7) in einer Bewegungsrichtung, die parallel zu der Symmetrieachse eines Behälters ist, während seiner Prüfung durch die Prüfvorrichtung (1) angetrieben wird, wobei die bewegliche Einrichtung mit einem äußeren Kaliber (14) zur Kontrolle des Äußeren des Rings der Behälter und einem inneren Kaliber (15) zur Kontrolle des Inneren des Rings und des Halses der Behälter ausgestattet ist, **dadurch gekennzeichnet, dass** die Prüfvorrichtung (1) ferner aufweist:
- eine Verarbeitungseinheit (31),
- ein System (30) zum Messen der Position der beweglichen Einrichtung (6) in Bezug auf das Gestell in der Bewegungsrichtung, wobei die Messungen der Position der beweglichen Einrichtung der Verarbeitungseinheit (31) bereitgestellt werden,
- ein System zum Erfassen (35) des Kontakts, der zwischen dem inneren Kaliber (15) und dem Behälter (2) bei der Bewegung der beweglichen Einrichtung (6) stattfindet, stattfindet, wobei die vorkommenden Kontakte der Verarbeitungseinheit (31) bereitgestellt werden,
- ein System zum Erfassen (37) des Kontakts, der zwischen dem äußeren Kaliber (14) und dem Behälter (2) bei der Bewegung der beweglichen Einrichtung stattfindet, wobei die vorkommenden Kontakte der Verarbeitungseinheit (31) bereitgestellt werden,
- wobei die Verarbeitungseinheit (31) geeignet ist, die Übereinstimmung hinsichtlich der Abmessungen der Ringe und/oder Hälse der Behälter und die Arten der Fehler für die hinsichtlich der Abmessungen nicht übereinstimmenden Behälter in Abhängigkeit von den Messungen der Position der beweglichen Einrichtung (6) und den vorkommenden Kontakten zwischen den Kalibern (14, 15) und dem Behälter (6) zu bestimmen.

2. Prüfvorrichtung nach Anspruch 1, **dadurch gekennzeichnet, dass** die bewegliche Einrichtung (6) einen beweglichen Träger (45) aufweist, in Bezug auf den der äußere Kaliber (14) und der innere Kaliber (15) entlang der Bewegungsrichtung und unabhängig voneinander beweglich befestigt sind.

3. Prüfvorrichtung nach Anspruch 1, **dadurch gekennzeichnet, dass** das Gestell (7) ein Entnahmerohr (29) aufweist, das ein erstes Ende, das mit dem Gestell (7) fest verbunden ist, und ein zweites Ende, das dem ersten gegenüberliegt, aufweist, das dazu bestimmt ist, auf dem Rand des Rings (4) des Behälters (2) im Falle eines unbeabsichtigten Wiederaufsteigens des Behälters zur Auflage zu kommen, wobei der innere (14) und der äußere Kaliber (15) über das zweite Ende des Entnahmerohrs hinausragen, indem sie sich jeweils im Inneren und außerhalb des Entnahmerohrs erstrecken.

4. Prüfvorrichtung nach Anspruch 1, **dadurch gekennzeichnet, dass** die Verarbeitungseinheit (31) in Abhängigkeit von den Messungen der Position der beweglichen Einrichtung (6) und den vorkommenden Kontakten zwischen den Kalibern (14, 15) und dem Behälter (2), Berechnungen ausführt, die komplementäre Informationen hinsichtlich der Abmessungen über die Hälse und die Ringe der Behälter (2) geben.

5. Prüfvorrichtung nach Anspruch 1 oder 4, **dadurch gekennzeichnet, dass** die Verarbeitungseinheit (31) ausgehend von den Informationen, die von dem System zum Messen (30) und den Systemen zum Erfassen (35, 37) bereitgestellt werden, die Höhe der Behälter berechnet.

6. Prüfvorrichtung nach Anspruch 1, 4 oder 5, **dadurch gekennzeichnet, dass** die Verarbeitungseinheit (31) die Umkehrung der Bewegungsrichtung des Motorisierungssystems (9) mit Hilfe der vorkommenden Kontakte von dem einen und/oder dem anderen der Kaliber (14, 15) mit dem Behälter (2) berechnet.

7. Prüfvorrichtung nach einem der Ansprüche 1 bis 6, **dadurch gekennzeichnet, dass** sie Mechanismen (40, 41) zum Dämpfen des Kontakts zwischen dem Behälter (2) und jedem Kaliber (14, 15) und zum Zurückstellen in Position der Kaliber aufweist.

8. Prüfvorrichtung nach Anspruch 1, **dadurch gekennzeichnet, dass** die Systeme zum Erfassen (35, 37) des Kontakts Anwesenheits- oder Näherungssensoren, vorzugsweise des Typs der magnetischen Sensoren, aufweisen.

9. Prüfvorrichtung nach einem der Ansprüche 3 bis 8, **dadurch gekennzeichnet, dass** der innere Kaliber (15) eine Stange (60) aufweist, die gegenüber dem Träger (45) beweglich ist und in Translation im Inneren von einer Hülle (49), die im Inneren des Entnahmerohrs (29) befestigt ist, geführt ist, wobei diese Stange (60) an einem ersten Ende mit einem Kontrollstift (15) versehen ist und an seinem zweiten Ende gegenüber dem Kontrollstift um mindestens einen Teil (35₁) des Systems zum Erfassen (35) des Kontakts, der zwischen dem inneren Kaliber (15) und dem Behälter (2) auftritt, versetzt ist.

10. Prüfvorrichtung nach einem der Ansprüche 3 bis 8, **dadurch gekennzeichnet, dass** der äußere Kaliber (14) eine Kontrollglocke aufweist, die das Entnahmerohr (29) umgibt und gegenüber dem Träger (45) der beweglichen Einrichtung beweglich befestigt ist.

11. Prüfvorrichtung nach Anspruch 10, **dadurch gekennzeichnet, dass** die Kontrollglocke (14) mit mindestens einer beweglichen Achse (52) versehen ist, die in Bezug auf den beweglichen Träger (45) geführt ist und als Mechanismus zum Dämpfen (41) mit mindestens einer Feder (53) ausgestattet ist, die zwischen der Kontrollglocke und dem Träger (45) angeordnet ist, wobei die bewegliche Achse mit mindestens einem Teil (37₁) des Systems zum Erfassen (37) des Kontakts, der zwischen dem inneren Kaliber (14) und dem Behälter (2) auftritt, versehen ist.

12. Prüfvorrichtung nach Anspruch 11, **dadurch gekennzeichnet, dass** der bewegliche Träger (45) der beweglichen Einrichtung (6) ein Stück (46) aufweist, das von dem Entnahmerohr (29) durchquert ist und das das Führen der Führungsachse oder Führungsachsen (52) der Kontrollglocke gewährleistet.

13. Prüfvorrichtung nach einem der Ansprüche 2 bis 12, **dadurch gekennzeichnet, dass** der bewegliche Träger (45) der beweglichen Einrichtung (6) eine Zahnstange (12) aufweist, die an einem ihrer Enden mit dem Stück (46) zum Führen der Kontrollglocke und an ihrem gegenüberliegenden Ende mit der Hülle zum Führen (49) der Stange (61) verbunden ist, die den Kontrollstift (15) trägt.

14. Prüfvorrichtung nach Anspruch 13, **dadurch gekennzeichnet, dass** die Zahnstange (12) durch das Motorisierungssystem (9), das vorzugsweise einen Servomotor aufweist, in hin- und hergehender Verschiebung angetrieben ist.

15. Prüfvorrichtung nach Anspruch 14, **dadurch gekennzeichnet, dass** das Motorisierungssystem (9) einen Rotationssensor aufweist, der Teil des Systems zum Messen (30) der Position der beweglichen Einrichtung (6) in Bezug auf das Gestell (7) ist.

16. Prüfvorrichtung nach Anspruch 9, **dadurch gekennzeichnet, dass** der Kontrollstift (15) mit Hilfe von einem System der passiven Dehnbarkeit auf der beweglichen Stange (60) befestigt ist, um das Einfügen des Kontrollstifts ins Innere von Behältern (2) zu erleichtern, die geneigte oder schlecht ausgerichtete Flaschenhälse aufweisen.

17. Prüfvorrichtung nach einem der Ansprüche 1 bis 16, **dadurch gekennzeichnet, dass** sie ein System zum Befestigen an dem Rahmen einer Maschine zur Prüfung aufweist, wobei das System zum Befestigen dehnbar ist, um eine Winkelbewegung oder eine Translationsbewegung zwischen der Einrichtung (1) und dem Rahmen der Maschine zu ermöglichen, um das Einfügen des Kontrollstifts ins Innere von Behältern (2) zu erleichtern, die geneigte oder schlecht ausgerichtete Flaschenhälse aufweisen.

## Claims

1. A device (1) for inspecting the rings and necks of containers (**2**), including a movable element (**6**) driven by a drive system (**9**) in an alternating movement relative to the frame (**7**), in a direction of movement parallel to the axis of symmetry of a container during inspection thereof by the inspection device (1), the movable element being provided with an outer gauge (**14**) for checking the outside of the ring of the containers, and an inner gauge (**15**) for checking the inside of the ring and neck of the containers, the inspection device (1) being **characterized in that** it further includes:
- a processing unit (**31**),
- a system (**30**) for measuring the position of the movable element (**6**) relative to the frame, in the direction of movement, the measurements of the position of the movable element being provided to the processing unit (**31**),
- a system (**35**) for detecting the contact between the inner gauge (**15**) and the container (**2**), during the movement of the movable element (**6**), the instances of contact being provided to the processing unit (**31**),
- a system (**37**) for detecting the contact between the outer gauge (**14**) and the container (**2**), during the movement of the movable element, the instances of contact being provided to the processing unit (**31**), and
- the processing unit (**31**) being suitable for determining whether or not the size of the rings and/or necks of the containers are acceptable, and the types of defects for the containers whereof the sizes of the rings and/or necks are not acceptable on the basis of the measurements of the position of the movable element (**6**) and of the instances of contact between the gauges (**14**, **15**) and the container (**2**).

2. An inspection device according to claim 1, **characterized in that** the movable element (**6**) includes a movable support (**45**) relative to which the outer gauge (**14**) and the inner gauge (**15**) are movably mounted in the direction of movement and independently of one another.

3. An inspection device according to claim 1, **characterized in that** the frame (**7**) includes an extractor tube (**29**) having a first end secured to the frame (**7**) and a second end opposite the first designed to bear on the edge of the ring (**4)** of the container (**2**) in the event the container is accidentally lifted, the inner (**15**) and outer (**14**) gauges protruding past the second end of the extractor tube, while respectively extending to the inside and outside of the extractor tube.

4. An inspection device according to claim 1, **characterized in that** the processing unit (**31**), as a function of the measurements of the position of the movable equipment (**6**) and the instances of contact between the gauges (**14**, **15**) and the container (**2**), performs calculations providing additional size information on the necks and rings of the containers (**2**).

5. An inspection device according to claim 1 or 4, **characterized in that** the processing unit (**31**) calculates, from information provided by the measuring system (**30**) and the detection systems (**35**, **37**), the height of the containers.

6. An inspection device according to claim 1, 4 or 5, **characterized in that** the processing unit (**31**) commands the inversion of the direction of movement of the drive system (**9**), using the instances of contact of one and/or the other of the gauges (**14**, **15**) with the container (**2**).

7. An inspection device according to one of claims 1 to 6, **characterized in that** it includes mechanisms (**40**, **41**) for damping the contact between the container (**2**) and each gauge (**14**, **15**) and returning said gauges to their position.

8. An inspection device according to claim 1, **characterized in that** the systems (**35**, **37**) for detecting contact include presence or proximity sensors, preferably of the magnetic type.

9. An inspection device according to one of claims 3 to 8, **characterized in that** the inner gauge (**15**) includes a rod (**60**) movable relative to the support (**45**) and guided in translation in a liner (**49**) mounted inside the extractor tube (**29**), that rod (**60**) being provided at a first end with a testing pin (**15**) and at its second end, offset relative to the testing pin, with at least part (**35₁**) of the system (**35**) for detecting contact occurring between the inner gauge (**15**) and the container (**2**).

10. An inspection device according to one of claims 3 to 8, **characterized in that** the outer gauge (**14**) includes a testing bell surrounding the extractor tube (**29**) and movably mounted relative to the support (**45**) of the movable element.

11. An inspection device according to claim 10, **characterized in that** the testing bell (**14**) is provided with at least one movable axis (**52**) guided relative to the movable support (**45**) and provided, as damping mechanism (**41**), with at least one spring (**53**) inserted between the testing bell and the support (**45**), the movable axis being provided with at least one part (**37₁**) of the system (**37**) for detecting contact occurring between the outer gauge (**14**) and the container (**2**).

12. An inspection device according to claim 11, **characterized in that** the movable support (**45**) of the movable element (**6**) includes a piece (**46**) passed through by the extractor tube (**29**) and guiding the guide axis or axes (**52**) of the testing bell.

13. An inspection device according to one of claims 2 to 12, **characterized in that** the support (**45**) of the movable element (**6**) includes a rack (**12**) connected at one of its ends to the guide piece (**46**) of the testing bell and, at its opposite end, to the guide liner (**49**) of the rod (**61**) supporting the testing pin (**15**).

14. An inspection device according to claim 13, **characterized in that** the rack (**12**) is driven in alternating translation by the drive system (**9**), which preferably includes a servomotor.

15. An inspection device according to claim 14, **characterized in that** the drive system (**9**) includes a rotation sensor that is part of the system (**30**) for measuring the position of the movable element (**6**) relative to the frame (**7**).

16. An inspection device according to claim 9, **characterized in that** the testing pin (**15**) is mounted on the movable rod (**60**) using a passive compliance system to facilitate the insertion of the testing pin inside containers (**2**) having sloped or misaligned mouths.

17. An inspection device according to one of claims 1 to 16, **characterized in that** it includes a system for fastening to the chassis of an inspection machine, the fastening system being compatible to allow angular or translational travel between said device (**1**) and said chassis of the machine, so as to facilitate the insertion of the testing pin inside containers (**2**) having sloped or misaligned mouths.
